# EUROPEAN PATENT APPLICATION

(11) **EP 4 604 316 A1**
(43) Date of publication of application: **20.08.2025**
(21) Application number: 23877743.7
(22) Date of filing: 13.10.2023
(51) Int. Cl.: H01P 1/208, H01P 1/20

(54) **FILTER FOR COMMUNICATION DEVICE**

(30) Priority: 13.10.2022 KR 20220131221; 12.10.2023 KR 20230136004
(71) Applicant: KMW Inc., Hwaseong-si, Gyeonggi-do 18462 (KR)
(72) Inventor: PARK, Nam Shin, Hwaseong-si Gyeonggi-do 18454 (KR); SHIN, Yeon Ho, Yongin-si Gyeonggi-do 16978 (KR); SOHN, Heok Jin, Osan-si Gyeonggi-do 18119 (KR); PARK, Sung Bae, Hwaseong-si, Gyeonggi-do 18417 (KR); KIM, Jae Hong, Yongin-si Gyeonggi-do 16937 (KR)
(74) Representative: Impuls legal PartG mbB
(86) International application number: PCT/KR2023/015811
(87) International publication number: WO 2024/080820

(57) **Abstract**

The present invention relates to a filter for a communication device, and in particular, can simplify the complexity of the filter and achieve the performance of various filters due to comprising a notch forming unit that restricts a filtering frequency area by forming prescribed notches at the left end and right end of a passband, wherein the notches are disposed closer than the separation distance between adjacent resonance elements at a portion in which magnetic field coupling between the resonance elements is dominant or a portion in which electrical field coupling between the resonance elements is dominant among at least three adjacent resonance elements sequentially selected along the longitudinal direction of a cavity for multipath coupling.

## Description

### [Technical Field]

The present disclosure relates to a filter for a communication device, and more particularly, to a filter for a communication device, wherein a cavity is constructed in a folding way in the entire process, multiple resonators are arranged to be spaced apart from each other within the cavity, and a notch-forming part in which an L-notch part through inductive coupling and a C-notch part through capacitive coupling are formed at both ends of a bandpass may be provided to be adjacent to the resonator.

### [Background Art]

A radio frequency device (including all of "communication devices"), such as a radio frequency filter, commonly has a connection structure for multiple resonators. Such a resonator is a circuit element that resonates at a specific frequency by a combination of an inductor L and a capacitor C in an equivalent electronic circuitry way. Each resonator has a structure in which a dielectric resonance (DR) element or a metal resonance element is installed within a cavity that is surrounded by a conductor and that has a metallic cylindrical form, a rectangular parallelepiped form, etc. Accordingly, each resonator has a structure that enables the resonance of a high frequency because only an electromagnetic field having a unique frequency according to a processing frequency band is present within the corresponding cavity. In general, each resonator has a multi-stage structure in which multiple resonance stages are formed using multiple cavities and multiple resonance stages are sequentially connected.

An example relating to a radio frequency filter having a multi- cavity structure may include an example disclosed in Korean Patent Application Publication No. 10-2004-0100084 (entitled "radio frequency filter", laid-open date: December 2, 2004) that was previously filed by the present applicant.

However, the conventional radio frequency filter has a problem in that a reduction in the size of a completed filter in the thickness direction thereof is very restricted because each resonator is extended within a cavity in the thickness direction thereof and a distance between the cavity and the resonator is tuned by deforming a part of a filter tuning cover that covers the cavity in a carving manner so that the filter has a desired bandpass characteristic.

Furthermore, the conventional radio frequency filter also has a problem in that the weight of a completed filter is greatly increased because an additional component of a conductor material needs to be installed in order to embody inductive coupling or capacitive coupling so as to reinforce a skirt characteristic between adjacent resonators or spaced resonators within multiple cavities.

Meanwhile, recently, in an antenna apparatus to which the massive multiple input multiple output (MIMO) technology has been applied, for the slimness fabrication of the entire product, research is carried out to minimize the thickness of an internal component, such as a filter. To this end, the type of filter that is most commonly used may include a dielectric ceramic filter.

However, the dielectric ceramic filter has a problem in that the use of both sides of a printed circuit board (PCB) is inevitably restricted in that the dielectric ceramic filter is directly and closely attached and coupled to one surface of a main board (or a PA board) stacked within an antenna housing part in view of the characteristics of a material thereof.

### [Disclosure]

### [Technical Problem]

The present disclosure has been contrived to solve the technical problems, and an object of the present disclosure is to provide a filter for a communication device in which the forming and design of notches on both sides of a passband are easy because various frequency characteristics can be secured by forming a cavity through a folding method, but constructing a notch-forming part that has a slightly small size in the thickness direction thereof and that has a convenient and simple form within the cavity.

Objects of the present disclosure are not limited to the aforementioned objects, and the other objects not described above may be evidently understood from the following description by those skilled in the art.

### [Technical Solution]

A filter for a communication device constructed as above according to an embodiment of the present disclosure includes a base plate that forms a hexahedral cavity in which the thickness of the cavity in forward and backward directions thereof is at least smaller than a size of a width of the cavity in a horizontal direction and up and down directions of the cavity are a length direction when a radiation direction of antenna elements are defined as the forward and backward directions, multiple resonators that form an identical layer with respect to the forward and backward directions (thickness direction) of the cavity, and an input port part that receives a predetermined signal to a one-side end resonator disposed most closely to one end of the cavity in the length direction, among the multiple resonators, and an output port part that outputs a predetermined signal from the other-side end resonator disposed most closely to the other end of the cavity in the length direction, among the multiple resonators. The filter includes a notch-forming part disposed within the cavity and disposed relatively closely compared to a separation distance between portions in which magnetic coupling of resonance elements or portions in which electric coupling thereof are dominant, among adjacent resonance elements comprising the input port part, the output port part, and the multiple resonators that are sequentially selected in the length direction.

In this case, a resonance stage that is the portion in which the electric coupling is dominant (hereinafter referred to as an "electric field part") as a portion having a great size in the length direction, compared to other portion (hereinafter referred to as a "magnetic field part") in which the magnetic coupling is relatively dominant, may be formed at a front end part of each of the multiple resonators, which corresponds to the other end part in the width direction, except the input port part and the output port part, among the resonance elements, so that the resonance stages are divided.

Furthermore, the notch-forming part may include an L-notch part that is adjacent and formed so that the entire L-notch part affects only the magnetic field part and a C-notch part that is adjacent and formed so that any part of the C-notch part affects the electric field part.

Furthermore, the L-notch part and the C-notch part may each have a function as a cross-coupling bar that couples the multiple resonators sequentially arranged in the length direction by skipping at least one or two or more resonators..

Furthermore, the L-notch part and the C-notch part may be disposed to form an identical layer in the thickness direction within the cavity, but are disposed to form a layer different from a layer of the multiple resonators.

Furthermore, the L-notch part may be provided to form a closed loop that is extended from one side of the cavity in a width direction to a direction toward the other side thereof in the width direction.

Furthermore, the C-notch part may be extended from one side of the cavity in the width direction to the direction toward the other side in the width direction and is provided relatively adjacently to any one of the resonance stages of the multiple resonators.

Furthermore, the L-notch part may be disposed relatively closely compared to a separation distance between the electric field parts of adjacent resonance elements, among adjacent at least three resonance elements that are sequentially selected in the length direction for multi-path coupling, may form a predetermined notch at a right stage of a passband, and may restrict the region of filtering frequency.

Furthermore, the C-notch part may be disposed relatively closely compared to a separation distance between the magnetic field parts of adjacent resonance elements, among adjacent at least three resonance elements that are sequentially selected in the length direction for multi-path coupling, may form a predetermined notch at a left stage of a passband, and may restrict the region of filtering frequency.

Furthermore, the L-notch part and the C-notch part may be defined as any one of the L-notch part and the C-notch part depending on properties of the electric field part and the magnetic field part that relatively strongly appear by adjacent coupling or the cross-coupling, among the multiple resonators.

Furthermore, if the L-notch part and the C-notch part are included in different ranges of the cavity in the length direction, the L-notch part and the C-notch part may be defined as any one of the L-notch part and the C-notch part depending on the properties of the electric field part and the magnetic field part, among the multiple resonators.

Furthermore, if the L-notch part and the C-notch part are included as a single component in an identical range of the cavity in the length direction, the L-notch part and the C-notch part may be defined as a complex component having both functions of the L-notch part and the C-notch part depending on properties by adjacent coupling and properties by the cross-coupling, among the multiple resonators.

Furthermore, when the input port part and the output port part are included as a coupled resonance element, the C-notch part may be branched from the input port part and may be extended and formed toward the resonance stage of a resonator adjacent to a one-side end resonator by skipping the one-side end resonator.

Furthermore, when the input port part and the output port part are included as a coupled resonance element, the L-notch part may be branched from the output port part and may be connected and formed in a resonator adjacent to the other-side end resonator by skipping the other-side end resonator.

Furthermore, the cavity may form the single base plate through a folding method.

Furthermore, the notch-forming part may be manufactured as a separate component in a panel form and may be coupled to a component corresponding to the base plate or within the cavity.

Furthermore, the notch-forming part may be provided integrally with the base plate, but may be provided in a form of in a panel disposed within the cavity upon the folding.

### [Advantageous Effects]

According to the filter for a communication device according to an embodiment of the present disclosure, there is an effect in that the notch can be easily formed and designed on both sides of a passband because various frequency characteristics can be secured by forming the cavity through a folding method, but constructing the notch-forming part that has a slightly small size in the thickness direction thereof and that has a convenient and simple form.

### [Description of Drawings]

FIG. 1 is a perspective view illustrating a filter for a communication device according to an embodiment of the present disclosure.
FIG. 2 is an internal perspective view of FIG. 1.
FIG. 3 is a perspective view of the state in which the base plate has been deployed, among the components of FIG. 1.
FIG. 4 is a plan view of FIG. 3.
FIG. 5 is an exploded perspective view illustrating an embodiment in which an input terminal pin and an output terminal pin, among the components of FIG. 1, are provided as separate components.
FIG. 6 is a cutaway perspective view (a, b) taken along line A-A.
FIG. 7 is a plan view for describing a principle and structure for forming a notch according to a first embodiment using a notch-forming part, among the components of the filter for a communication device according to an embodiment of the present disclosure.
FIG. 8 is an internal perspective view of FIG. 7.
FIG. 9 is a circuit diagram of FIG. 7.
FIG. 10 is a graph illustrating frequency characteristics of FIG. 7.
FIG. 11 is a plan view for describing a principle and structure for forming a notch according to a second embodiment using the notch-forming part, among the components of the filter for a communication device according to an embodiment of the present disclosure.
FIG. 12 is an internal perspective view of FIG. 11.
FIG. 13 is a circuit diagram of FIG. 11.
FIG. 14 is a graph illustrating frequency characteristics of FIG. 11.
FIG. 15 is a plan view for describing a principle and structure for forming a notch according to a third embodiment using the notch-forming part, among the components of the filter for a communication device according to an embodiment of the present disclosure.
FIG. 16 is an internal perspective view of FIG. 15.
FIG. 17 is a circuit diagram of FIG. 15.
FIG. 18 is a graph illustrating frequency characteristics of FIG. 15.
FIG. 19 is a plan view for describing a principle and structure for forming a notch according to a fourth embodiment using the notch-forming part, among the components of the filter for a communication device according to an embodiment of the present disclosure.
FIG. 20 is an internal perspective view of FIG. 19.
FIG. 21 is a graph illustrating frequency characteristics of FIG. 19.

### <Description of Reference Numerals >

100: filter for communication device 105: base plate
110: body lower-part forming panel 120: one-side thickness-forming panel
130: other-side thickness-forming panel 140: notch-forming part
141: L-notch part 143: C-notch part
145: barrier component 150: body upper part-forming panel
170: resonators 175A: input port part
175B: output port part C: cavity

### [Best Mode]

Advantages and characteristics of the present disclosure and a method for achieving the advantages and characteristics will become apparent from embodiments described in detail later in conjunction with the accompanying drawings. However, the present disclosure is not limited to the disclosed embodiments, but may be implemented in various different forms. The embodiments are merely provided to complete the present disclosure and to fully notify a person having ordinary knowledge in the art to which the present disclosure pertains of the category of the present disclosure. The present disclosure is merely defined by the category of the claims. Throughout the specification, the same reference numeral denotes the same component.

Hereinafter, embodiments of the present disclosure are described in detail with reference to the drawings.

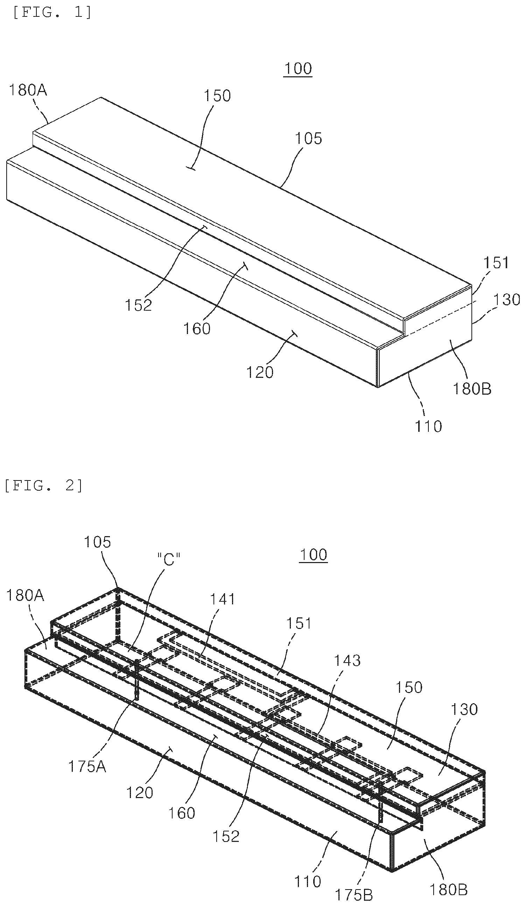

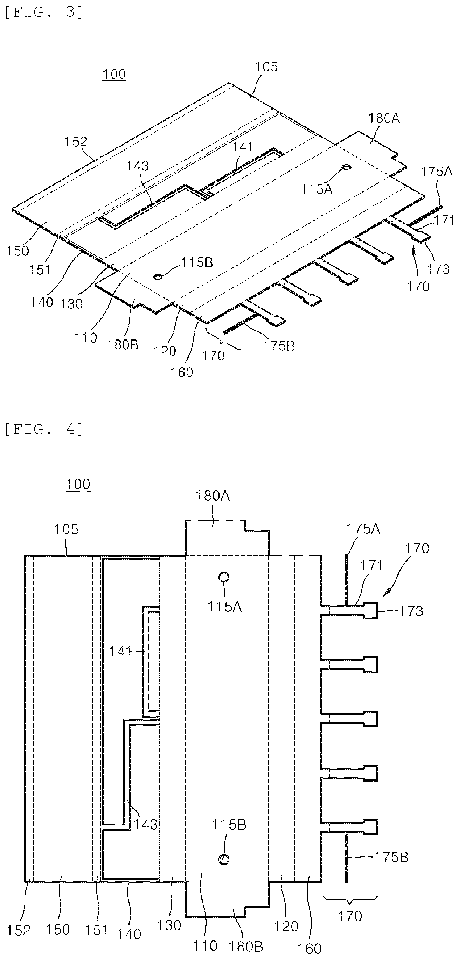

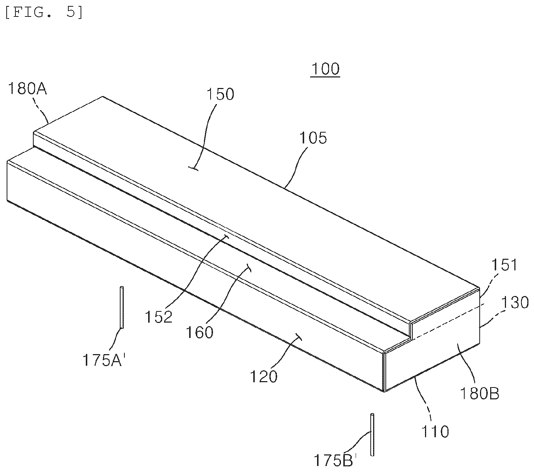

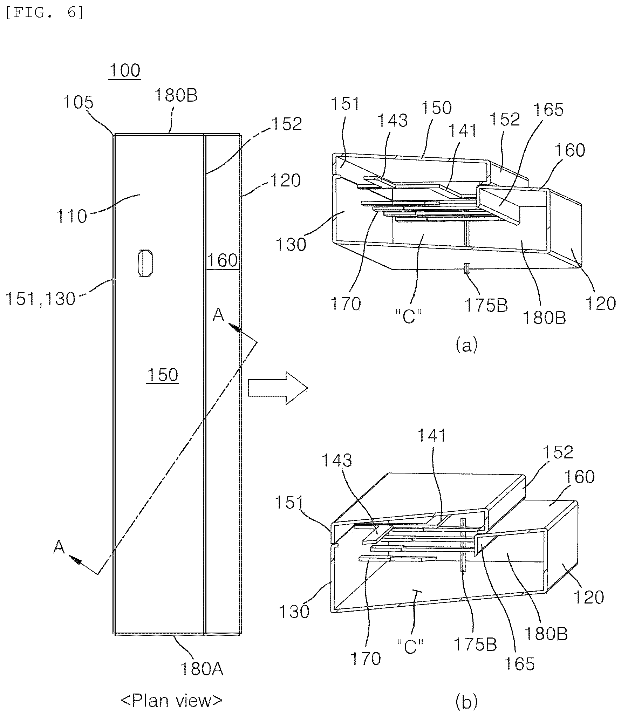

FIG. 1 is a perspective view illustrating a filter for a communication device according to an embodiment of the present disclosure. FIG. 2 is an internal perspective view of FIG. 1. FIG. 3 is a perspective view of the state in which the base plate has been deployed, among the components of FIG. 1. FIG. 4 is a plan view of FIG. 3. FIG. 5 is an exploded perspective view illustrating an embodiment in which an input terminal pin and an output terminal pin, among the components of FIG. 1, are provided as separate components. FIG. 6 is a cutaway perspective view (a, b) taken along line A-A.

An antenna for communication includes a filter for filtering a signal having a specific passband. A cavity filter, a waveguide filter, etc. may be used as the filter depending on its characteristics. In an embodiment of the present disclosure, as a kind of the cavity filter, a filter body is not manufactured according to a conventional molding forming method, but a cavity filter using a folding method of forming a cavity, that is, a major transmission path of a signal, by a method of folding a single base plate will be mainly described.

In general, in the antenna technology field, a filter is a communication part that performs a role of filtering only a signal having a specific frequency band, among signals that need to be input or output during a transmission and reception process, so that a consumer (user) can obtain only a desired signal as a result value.

For the filtering of such a signal, as may be seen from its name, a cavity filter has a cavity, that is, a predetermined signal filtering section (signal transmission path) formed between an input port to which a signal is input and an output port from which a signal is output. A consumer obtains a specific band frequency signal value of a desired section through a process of tuning a frequency through the cavity.

However, up to now, in the same industry in which an antenna apparatus is manufactured, in order to manufacture the cavity filter, only a method of manufacturing the cavity by processing the inside of the filter body made of a ceramic material (electric material) or a material more stiff than the ceramic material, manufacturing an essential component for frequency filtering, such as a plurality of resonators, and then fixing the essential component within the cavity has been developed and disclosed.

However, a filter for a communication device according to embodiments of the present disclosure discloses an epoch-making technical characteristic in which a single flat base plate not greater than a predetermined thickness can be processed in a sheet metal form by breaking away from the aforementioned manufacture method and a structure within a cavity can be then constructed through a folding process even without using a separate bonding process.

However, prior to a description of a filter 100 (100A to D) for a communication device according to embodiments of the present disclosure, a shape of a cavity C and an installation location or shape of a notch-forming part 140 disposed within the cavity may become very important elements in understanding the present disclosure. Accordingly, the definition of terms related to directions may be set as follows.

That is, in general, the beam radiation direction of antenna elements (radiation elements) (not illustrated) may be defined as forward and backward directions. More specifically, the antenna elements may be arranged on a front surface of an antenna housing part (not illustrated) in up and down directions or in the horizontal direction.

Such antenna elements may be stacked and disposed on a front surface of the filter 100 (100A to D) for a communication device, which is disposed within an antenna housing part, according to embodiments of the present disclosure through the medium of an antenna board assembly (not illustrated).

In this case, the cavity C of the filter 100 (100A to D) for a communication device according to embodiments of the present disclosure may be formed in the form of a hexahedron in which the thickness of the cavity in the forward and backward directions is at least smaller than the size of the width of the cavity in the horizontal direction and up and down directions of the cavity is a length direction.

Therefore, the forward and backward directions, that is, the slimmest portion of the hexahedron that forms the cavity C, may be defined a "thickness direction", the horizontal direction may be defined a "width direction", and the up and down directions may be defined a "length direction".

The filter 100 for a communication device according to an embodiment of the present disclosure includes a base plate 105 that is manufactured in a deployed state, but forms the cavity C therein upon folding and is made of a conductive material and provided to be foldable so that a plurality of resonators 170 that protrudes in the thickness direction or the width direction by a predetermined length is disposed within the cavity C.

It is preferred that the base plate 105 is made of a conductive material, but may be made of a non-conductive material that facilitates manufacturing. It is to be said in advance that a conductive substance may be subsequently formed on all of components inside and outside the base plate, including the cavity C, in a film form through a plating method so that the base plate can perform the signal transmission path (or signal filtering section) function of the cavity C.

However, it is preferred that the base plate 105 is made of a variable material suitable for the maintenance of a shape of the base plate in that the shape of the base plate needs to be continuously maintained unless the base plate is provided with an external force after the shape is deformed by a folding process as described later.

In this case, the cavity C is a dielectric material filling space in which a dielectric material having a predetermined dielectric constant is filled, and means a space in the state in which the inside of the cavity is emptied so that the inside of the cavity is filled with the dielectric material. It is also said in advance that a separate dielectric material filling process is not required if the air in the atmospheric pressure state is adopted as the dielectric material in that the air is also a kind of dielectric material having a dielectric constant of 1.

Meanwhile, in the filter 100 for a communication device according to an embodiment of the present disclosure, the base plate 105 performs a role of forming the cavity C, that is, a dielectric material filling space.

In this case, as referred for in FIGS. 3 and 4, the base plate 105 may include a body lower-part forming panel 110 that forms the bottom of the cavity C, one-side thickness-forming panel 120 and the other-side thickness-forming panel 130 that are extended in a plane form so that the lengths of the widths of the one-side thickness-forming panel and the other-side thickness-forming panel are increased from the width direction one-side stage and other-side stage of the body lower-part forming panel 110 and that increase the size of the cavity C in the thickness direction thereof, a resonator panel 160 that is extended and formed from the front end of any one of the one-side thickness-forming panel 120 and the other-side thickness-forming panel 130 and that includes the plurality of resonators 170 provided within the cavity C corresponding to the top of the body lower-part forming panel 110 in a way to protrude from the cavity, and a body upper part-forming panel 150 that is extended and formed from the front end of the other of the one-side thickness-forming panel 120 and the other-side thickness-forming panel 130 and that is provided in a form in which the body upper part-forming panel covers the top of the cavity C in a way to face the body lower-part forming panel 110.

Furthermore, one-side shielding panel 180A and the other-side shielding panel 180B that shield one end and the other end of the cavity C in the length direction thereof, which have been opened, may be integrally extended and formed at one end and the other end of the body lower-part forming panel 110 in the length direction thereof.

In this case, it is limitedly described that the one-side shielding panel 180A and the other-side shielding panel 180B have been integrally formed in the body lower-part forming panel 110, but the one-side shielding panel and the other-side shielding panel may be integrally provided to be symmetrical to a neighbor panel (e.g., the body upper part-forming panel 150) according to an embodiment. Furthermore, the one-side shielding panel 180A and the other-side shielding panel 180B may be integrally formed in a neighbor panel so that the one-side shielding panel and the other-side shielding panel are divided into two members, respectively, and may be provided to fully shield opened portions of the cavity C, respectively, by a folding operation.

Meanwhile, an input port installation part 115A and an output port installation part 115B that are formed to be penetrated up and down may be provided at length direction one-side end and length direction other-side end of the body lower-part forming panel 110, respectively. An input terminal pin 175A' described later may be penetrated and installed in the input port installation part 115A. An output terminal pin 175B' described later may be penetrated and installed in the output port installation part 115B.

In particular, although not illustrated in the drawings, the input terminal pin 175A' and the output terminal pin 175B' that are inserted into the input port installation part 115A and the output port installation part 115B can minimize an insertion loss because an outer circumferential surface of each of the input terminal pin and the output terminal pin is provided to be surrounded with a stud or Teflon having a serration protrusion shape.

Furthermore, as referred for in FIGS. 3 and 4, the base plate 105 may further include a notch-forming part 140 that is provided between any one (adopted as the other-side thickness-forming panel 130 in an embodiment of the present disclosure) of the one-side thickness-forming panel 120 and the other-side thickness-forming panel 130 and the body upper part-forming panel 150 and that is extended and disposed within the cavity C in the horizontal direction (or the thickness direction).

As referred for in FIGS. 3 and 4, the notch-forming part 140 is provided integrally with the base plate 105, but may be provided in the form of a panel that is disposed within the cavity C upon folding process.

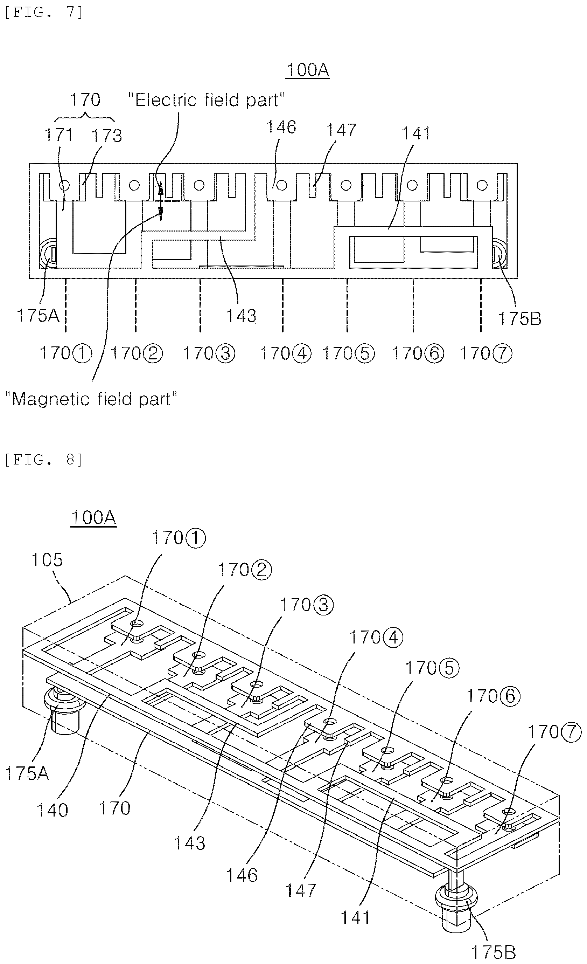

However, it is not essentially limited that the notch-forming part 140 is integrally formed in the base plate 105 and constructed by a folding process. As referred for in FIGS. 7 to 9 described later, the notch-forming part may be constructed in a way to be manufactured as a separate component in a panel form and coupled to a component corresponding to the base plate 105 or within the cavity C.

Furthermore, the notch-forming part 140 does not need to be essentially provided in a panel form, but may be integrally formed at a portion corresponding to the body upper part-forming panel 150 as far as a shape of the notch-forming part can be deformed into the cavity C by a worker who perform frequency tuning subsequently.

In this case, the notch-forming part 140 may include an L-notch part 141 that forms a notch (hereinafter referred to as an "L-notch") by inductive coupling at a right stage (high frequency region) of a passband and a C-notch part 143 that forms a notch (hereinafter referred to as a "C-notch") by capacitive coupling on a left stage (low frequency region) of the passband.

Locations at which the L-notch part 141 and the C-notch part 143 are formed and shapes of the L-notch part and the C-notch part, and the principle that the L-notch and the C-notch are formed are described more specifically by applying various embodiments described later.

As referred for in FIGS. 3 and 4, if both the notch-forming part 140 and the body upper part-forming panel 150 are provided, one-side separation panel 151 and the other-side separation panel 152 that isolate the notch-forming part 140 and the body upper part-forming panel 150 in the thickness direction may be further integrally provided in the base plate 105. After one-side separation panel and the other-side separation panel are spaced apart from each other at a predetermined distance by a folding operation, the bottom of the other-side separation panel 152 may be coupled to the bottom of the one-side separation panel 151 through a connection line by butt welding.

Meanwhile, a plurality of frequency tuning bars (refer to "146" in FIGS. 7 and 8 described later) that perform fine frequency tuning by adjusting a separation distance from the plurality of resonators 170 provided to form a single layer with respect to the thickness direction within the cavity C and a plurality of coupling adjustment bars (refer to "147" in FIGS. 7 and 8 described later) each having a shape deformed right downward between the plurality of resonators 170 may be integrally incised and formed in the body upper part-forming panel 150.

In this case, the plurality of frequency tuning bars 146 and the plurality of coupling adjustment bars 147 may be integrally formed in a tuning frame (reference numeral not indicated) in which the notch-forming part 140 has been formed, along with the L-notch part 141 and the C-notch part 143.

More specifically, the tuning frame is formed in the form of a frame that has a rectangular form and an edge. The plurality of tuning bars 146 is extended and formed from the inside of one-side long side, among four sides of the tuning frame to the other-side long side thereof. The plurality of tuning bars may be provided to be spaced apart from each other at a predetermined distance in the length direction.

Furthermore, the plurality of coupling adjustment bars 147 is integrally formed in the tuning frame. Like the plurality of tuning bars 146, the plurality of coupling adjustment bars is extended and formed from the inside of one-side long side thereof to the other-side long side. Each of the plurality of coupling adjustment bars may be provided in an isolated space between the plurality of tuning bars 146.

Meanwhile, the L-notch part 141 and the C-notch part 143 may be formed to be extended from the inside of the other-side long side, among the four sides of the tuning frame to the one-side long side.

In this case, the plurality of tuning bars 146 and the plurality of coupling adjustment bars 147 form a layer different from the plurality of resonators 170 within the cavity C in that the tuning frame forms the same layer within the cavity C.

That is, the plurality of tuning bars 146 may be disposed in a single layer different from the layer of the plurality of resonators 170 within the cavity C so that a separation distance between the plurality of tuning bars 146 and the plurality of resonators 170 disposed within the cavity C can be adjusted.

Furthermore, a tool input hole (not illustrated) may be formed in the body upper part-forming panel 150 in a way to be penetrated up and down so that the shapes of the L-notch part 141 and the C-notch part 143 can be deformed by using a predetermined tool.

In this case, as referred for in FIGS. 2 to 6, for example, assumed that the cavity C generated by the folding of each portion of the base plate 105 is formed in a rectangular parallelepiped shape that is long in the length direction and that is relatively very small in the size in the thickness direction up and down compared to a front-to-back width direction thereof, the plurality of resonators 170 may be provided to form the same single layer with respect to the thickness direction of the cavity C.

Furthermore, the notch-forming part 140 also forms the same single layer with respect to the thickness direction of the cavity C, but may be provided to form a single layer different from the layer of the plurality of resonators 170.

However, a location at which the notch-forming part 140 is formed and a shape of the notch-forming part are not essentially determined. The notch-forming part may be variously designed as described later depending on the location of the resonator related to multi-path coupling and a choice.

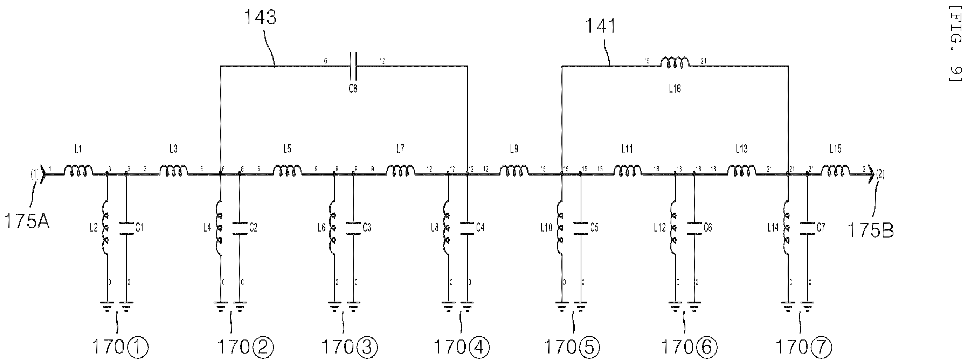

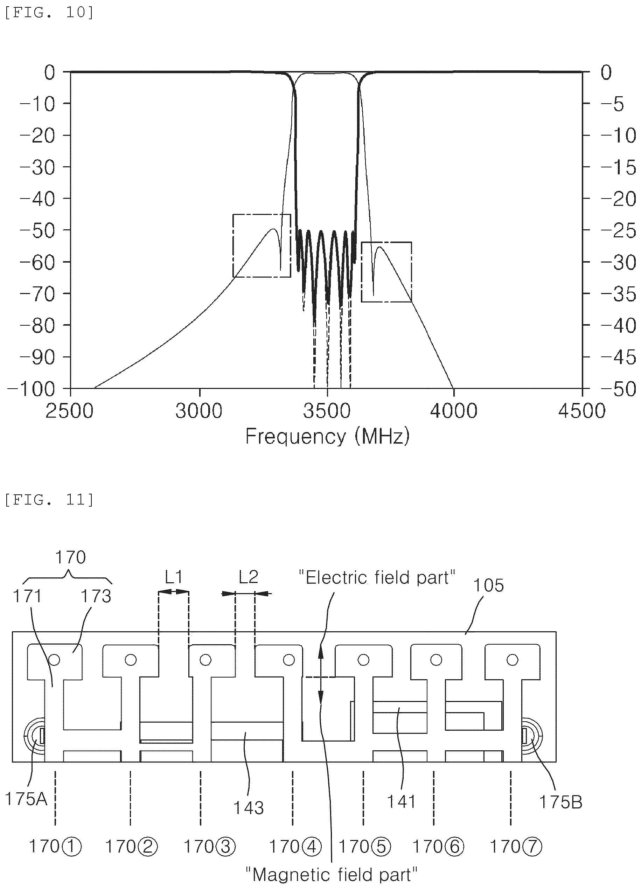

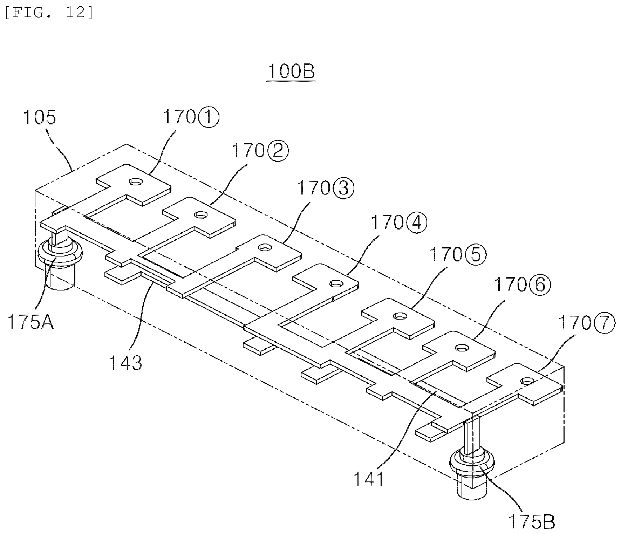

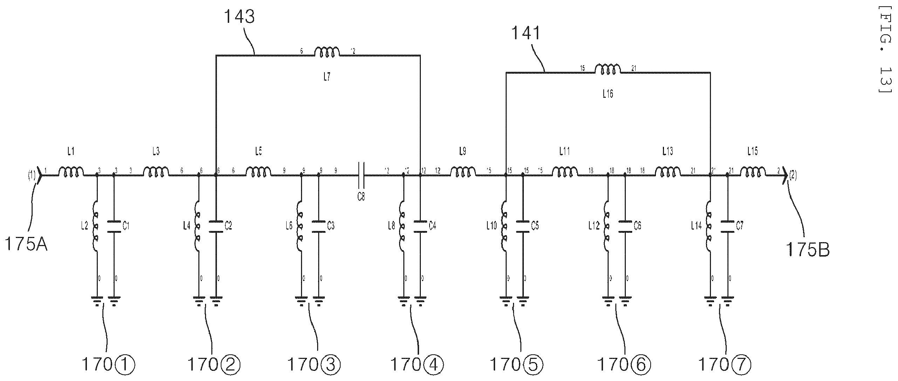

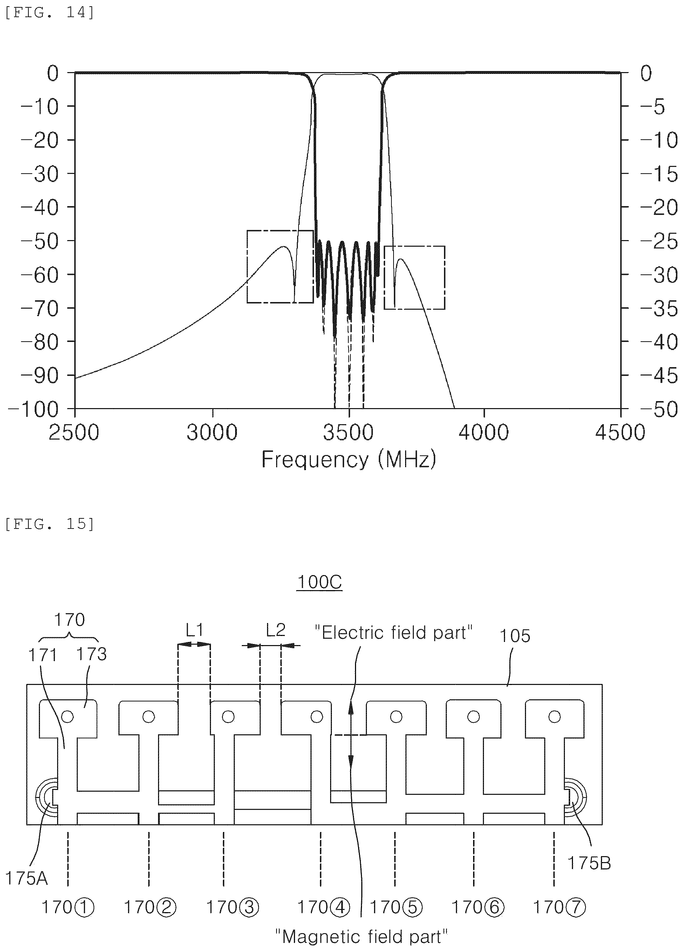

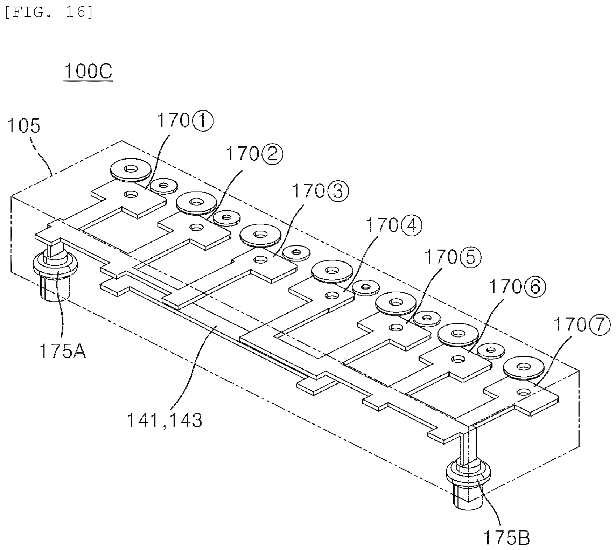

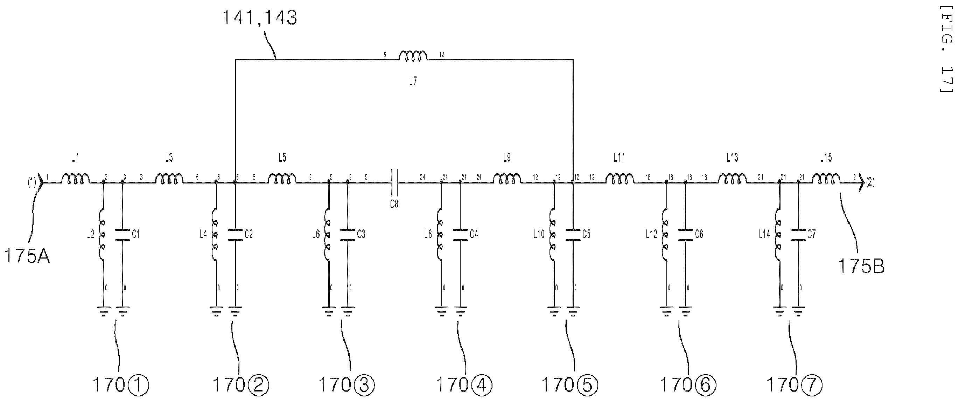

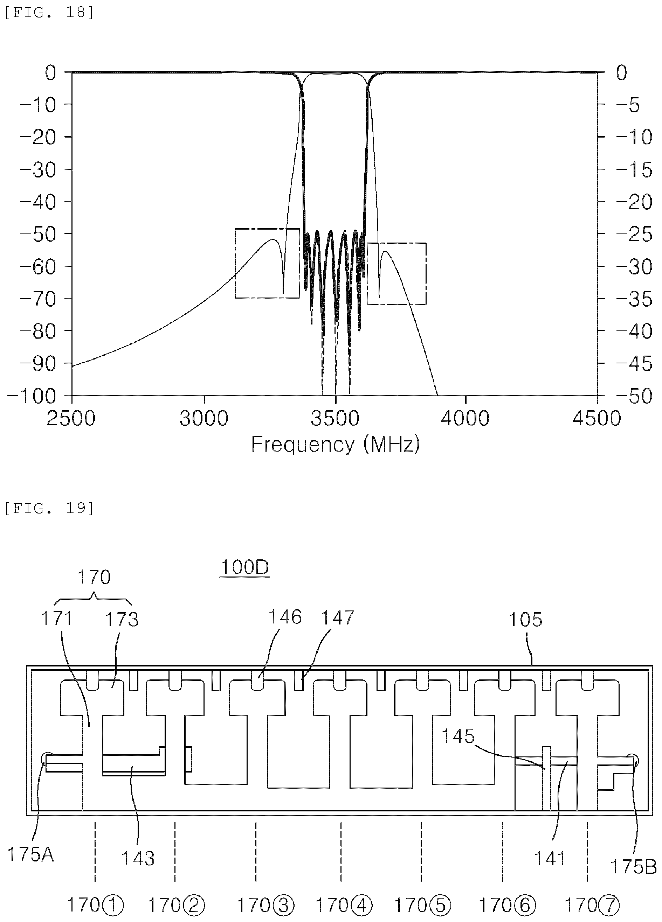

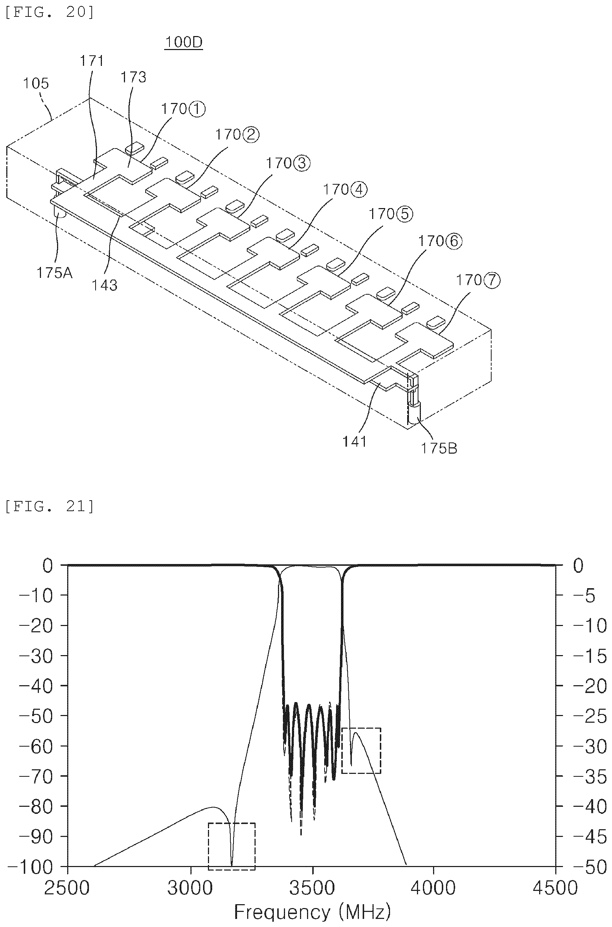

FIG. 7 is a plan view for describing a principle and structure for forming a notch according to a first embodiment using a notch-forming part, among the components of the filter for a communication device according to an embodiment of the present disclosure. FIG. 8 is an internal perspective view of FIG. 7. FIG. 9 is a circuit diagram of FIG. 7. FIG. 10 is a graph illustrating frequency characteristics of FIG. 7. FIG. 11 is a plan view for describing a principle and structure for forming a notch according to a second embodiment using the notch-forming part, among the components of the filter for a communication device according to an embodiment of the present disclosure. FIG. 12 is an internal perspective view of FIG. 11. FIG. 13 is a circuit diagram of FIG. 11. FIG. 14 is a graph illustrating frequency characteristics of FIG. 11. FIG. 15 is a plan view for describing a principle and structure for forming a notch according to a third embodiment using the notch-forming part, among the components of the filter for a communication device according to an embodiment of the present disclosure. FIG. 16 is an internal perspective view of FIG. 15. FIG. 17 is a circuit diagram of FIG. 15. FIG. 18 is a graph illustrating frequency characteristics of FIG. 15. FIG. 19 is a plan view for describing a principle and structure for forming a notch according to a fourth embodiment using the notch-forming part, among the components of the filter for a communication device according to an embodiment of the present disclosure. FIG. 20 is an internal perspective view of FIG. 19. FIG. 21 is a graph illustrating frequency characteristics of FIG. 19.

In general, in order to improve the blocking band attenuation characteristic of a bandpass filter (BPF), a transmission zero design using electric coupling, magnetic coupling, or mixed coupling between odd-numbered (cascaded triplet) or even-numbered (cascaded quardruplet) resonance elements (resonators) that do not neighbor each other.

In general, a left and right-symmetrical transmission zero of a filter passband occurs when the resonance elements are cross-coupled by skipping an even-numbered resonance element. One transmission zero occurs on the left or right of a passband depending on the type of coupling (i.e., depending on whether coupling is electric coupling or magnetic coupling) when the resonance elements are cross-coupled by skipping an odd-numbered resonance element.

A transmission zero that symmetrically occurs on the left side or right side of a passband by using electric coupling is called capacitive cross-coupling. A transmission zero that occurs on the right side of a passband by using magnetic coupling is called inductive cross-coupling.

In general, in the case of coupling in the state in which a separate notch structure is not present, magnetic coupling is dominant between adjacent resonance elements (resonators). Capacitive cross-coupling of a cavity filter is embodied by artificially installing the separate notch the structure.

The notch-forming part 140, among the components of the filter 100 for a communication device according to an embodiment of the present disclosure, performs a function as the notch structure. In particular, the present disclosure solves a problem in that the design of the notch structure as the notch-forming part 140 is very difficult because the multiple resonators 170 are provided to form the same layer with respect to the thickness direction of the cavity C, but are arranged to be spaced apart from each other at a predetermined distance in parallel in the length direction of the cavity C.

More specifically, as referred for in FIGS. 7 to 21, in the filters 100A to 100D for a communication device according to an embodiment of the present disclosure, if the input port part 175A, the output port part 175B, and the multiple resonators 170① to 170⑦ are defined as "resonance elements", the notch-forming part 140 may be designed to be disposed relatively close compared to a separation distance of a portion in which magnetic coupling of each adjacent resonance element, among adjacent at least three resonance elements that are sequentially selected in the length direction of the cavity C, or a portion in which electric coupling thereof is dominant, for multi-path coupling, to form predetermined notches at the right stage and left stage of the passband, and to restrict the region of a filtering frequency.

Referring to FIGS. 7 and 8, a resonance stage 173, that is, a portion in which electric coupling is dominant (hereinafter referred to as an "electric field part") as a portion having a great size in the length direction, compared to other portion (hereinafter referred to as a "magnetic field part") in which magnetic coupling is relatively dominant, may be formed at the front end part of each of the multiple resonators 170, which corresponds to the other end part in the width direction thereof, except the input port part 175A and the output port part 175B, among the resonance elements so that the resonance stages are divided.

In this case, the notch-forming part 140 may include the L-notch part 141 that is adjacent and formed so that the entire L-notch part affects only the magnetic field part and the C-notch part 143 that is adjacent and formed so that any part of the C-notch part affects only the electric field part.

However, it is to be noted that whether the notch structure is defined as the L-notch part 141 and the C-notch part 143 included in the cavity C is not essentially defined in relation to whether the notch structure is simply physically adjacent and formed. This is described later more specifically.

Meanwhile, the notch-forming part 140 may have a function as a cross-coupling bar that couples the multiple resonators 170 sequentially arranged in the length direction of the cavity C by skipping at least one or two or more resonators, among the multiple resonators.

For example, referring to FIG. 7, the C-notch part 143 performs a role of cross-coupling the second resonator 170② and the fourth resonator 170④ by starting at a location close to the resonator 170② that is disposed to be relatively close to the initial input stage side and being extended and formed at a location close to the resonator 170④ that is disposed to be relatively close to the initial output stage side by skipping the resonator 170③ adjacent to the resonator 170②.

Likewise, the L-notch part 141 performs a role of cross-coupling the fifth resonator 170⑤ and the seventh resonator 170⑦ by starting at a location close to the resonator 170⑤ that is disposed to be relatively close to the initial input stage and being extended and formed at a location close to the resonator 170⑦ that is disposed to be relatively close on the initial output stage by skipping the resonator 170⑥ adjacent to the resonator 170⑤.

As referred for in FIGS. 7 and 8, in the notch-forming part 140 that is embodied as a first embodiment, among the components of the filter 100A for a communication device according to an embodiment of the present disclosure, the L-notch part 141 may be disposed to form a layer different from a layer formed by the resonators 170 in the thickness direction of the cavity C, but may be provided to form a closed loop that is extended from one side of the cavity C in the width direction thereof to a direction toward the other side thereof in the width direction. The C-notch part 143 may be disposed to form a layer different from a layer formed by the resonators 170 in the thickness direction of the cavity C, but may be extended from one side of the cavity C in the width direction to the direction toward the other side thereof in the width direction and provided to be relatively close to any one of the resonance stages 173 of the multiple resonators 170.

In this case, it is preferred that the extension front end of the L-notch part 141 forms the closed loop within the region of the magnetic field part as much as possible. It is preferred that the front end of the C-notch part is formed to be adjacent to the resonance stage 173 of a resonator (e.g., the fourth resonator 170④) to be coupled.

The principle that the notches are formed at both ends of a passband on the left and right sides thereof by the notch-forming part 140 embodied as the first embodiment is described in brief as follows with reference to FIGS. 9 and 10.

When a signal is input from the input port part 175A, that is, one side of the cavity C, magnetic coupling (L-coupling) is dominant in the body part 171 up to the portion of the resonance stage 173, that is, the front end of each resonator 170, and electric coupling (C-coupling) is dominant at the portion of the resonance stage 173. The two coupling properties are present simultaneously.

Furthermore, upon adjacent coupling between resonance elements (i.e., the input port part 175A and the output port part 175B, and the resonators 170), coupling properties may be determined by the notch structure (notch-forming part 140) additionally installed within the cavity C. Accordingly, each structure of the notch-forming part 140 may be defined.

More specifically, as referred for in FIGS. 9 and 10, adjacent coupling is performed between the second resonator 170② and the third resonator 170③ and between the third resonator 170③ and the fourth resonator 170④. In general, it may be seen from the circuit diagram of FIG. 9 that inductive coupling is performed between the resonators 170 because magnetic coupling is dominant between the resonators 170.

Furthermore, the second resonator 170② and the fourth resonator 170④ are cross-coupled by the C-notch part 143. In this case, it may be seen that capacitive coupling is performed because electric coupling is dominant by the extension front end of the C-notch part 143.

Meanwhile, as referred for in FIGS. 9 and 10, likewise, adjacent coupling is performed between the fifth resonator 170⑤ and the sixth resonator 170⑥ and between the sixth resonator 170⑥ and the seventh resonator 170⑦, but inductive coupling is performed therebetween. Cross-coupling is performed between the fifth resonator 170⑤ and the seventh resonator 170⑦ by the L-notch part 141. In this case, it may be seen that inductive coupling is performed between the fifth resonator and the seventh resonator in that the closed loop of the L-notch part 141 is formed to be adjacent to the magnetic field part in which magnetic coupling is dominant.

Therefore, as referred for in FIG. 10, according to the notch-forming part 140 embodied as the first embodiment, a designer can secure a desired frequency characteristic because the C-notch (the right side) and the L-notch (the right side) are formed at the right stage and left stage of the passband, respectively.

Meanwhile, as referred for in FIGS. 11 and 12, in the notch-forming part 140 embodied as a second embodiment, among the components of the filter 100A for a communication device according to an embodiment of the present disclosure, the L-notch part 141 and the C-notch part 143 may be defined as any one of the L-notch part 141 and the C-notch part 143 depending on the properties of an electric field part and an magnetic field part that relatively strongly appear by adjacent coupling or cross-coupling of the multiple resonators 170.

That is, the C-notch part 143 of the notch-forming part 140 embodied as the second embodiment has a structure in which the second resonator 170② and the fourth resonator 170④ are cross-coupled as in the first embodiment, but the second embodiment is different from the first embodiment in that a shape of the C-notch part is provided to form a closed loop within the range of the magnetic field part identically with the L-notch part 141 unlike the notch-forming part 140 of the first embodiment.

Nevertheless, in the C-notch part 143 of the notch-forming part 140 embodied as the second embodiment, as referred for in FIGS. 11 to 14, the C-notch by capacitive coupling is formed at the left stage of the passband in that a separation distance L2 between the resonance stages 173 of the third resonator 170③ and the fourth resonator 170④ that are subjected to adjacent coupling is provided to be smaller than a separation distance L1 between the resonance stages 173 of other resonators (e.g., the second resonator 170② and the third resonator 170③). In this case, the notch-forming part 140 that cross-couples the second resonator 170② and the fourth resonator 170④ may be defined as the C-notch part 143.

Likewise, in the L-notch part 141 of the notch-forming part 140 embodied as the second embodiment, the L-notch by inductive coupling is formed at the right stage of the passband in that inductive coupling (magnetic coupling) appears more dominantly than capacitive coupling (electric coupling) between the fifth resonator 170⑤ and the sixth resonator 170⑥ that are subjected to adjacent coupling and between the sixth resonator 170⑥ and the seventh resonator 170⑦ that are subjected to adjacent coupling. In this case, the notch-forming part 140 that cross-coupling the fifth resonator 170⑤ and the seventh resonator 170⑦ may be defined as the L-notch part 141.

However, a method of defining the L-notch part 141 and the C-notch part 143 is limited to a case in which each notch-forming part 140 is provided in the range (e.g., different ranges of the cavity C in the length direction) of the resonators 170.

If the L-notch part 141 and the C-notch part 143 are provided as a single component in the same range in the length direction of the cavity C as referred for in FIGS. 15 to 18, the L-notch part and the C-notch part may be defined as a complex component having both the functions of the L-notch part 141 and the C-notch part 143 depending on the properties by adjacent coupling and the properties by cross-coupling, among the multiple resonators 170.

More specifically, referring to FIGS. 15 and 16, the notch-forming part 140 performs a role of cross-coupling the second resonator 170② and the fifth resonator 170⑤ by starting at a location adjacent to the second resonator 170② of the multiple resonators 170 and being extended and formed while forming a closed loop at a portion adjacent to the fifth resonator 170⑤ by skipping the third resonator 170③ and the fourth resonator 170④.

In this case, the notch-forming part 140 performs a function as inductive coupling in that the notch-forming part cross-couples the resonators 170 by skipping an even-numbered resonator and performs a function as capacitive coupling due to dominant electric coupling because a separation distance L2 between the resonance stages 173 of the third resonator 170③ and the fourth resonator 170④ that are disposed in the range of the notch-forming part 140 and that are subjected to adjacent coupling is smaller than a separation distance L1 between the resonance stages of other resonators. Accordingly, it is preferred that the notch-forming part 140 is defined as the L-notch part 141 and also defined as a complex component including the C-notch part 143.

According to the notch-forming part 140 constructed as above and embodied as the third embodiment, as referred for in FIG. 18, a designer can obtain a desired frequency characteristic because the C-notch and the L-notch are formed at the right stage and left stage of the passband.

Furthermore, the filter 100D for a communication device according to an embodiment of the present disclosure discloses the following notch-forming principle by the notch-forming part 140 embodied as a fourth embodiment, which has been referred for in FIGS. 19 to 21.

That is, assumed that the input port part 175A and the output port part 175B may be included as a coupled resonance element, the C-notch part 143 may be provided by being branched from the input port part 175A and being extended and formed toward the resonance stage 173 of a resonator (i.e., the second resonator 170②) adjacent to a resonator (i.e., the first resonator 170①) at an end on one side thereof by skipping the first resonator.

Furthermore, under the same assumption, the L-notch part 141 may be provided to be branched from the output port part 175B and to be connected and formed in a resonator (i.e., the sixth resonator 170⑥) adjacent to a resonator (i.e., the seventh resonator 170⑦) at an end on the other side thereof by skipping the seventh resonator.

In this case, the C-notch part 143 embodies capacitive coupling between the first resonator 170① and the second resonator 170② by skipping the first resonator 170① at the input step timing of a signal when the signal is input through the input port part 175A. The L-notch part 141 embodies inductive coupling between the seventh resonator 170⑦ and the output port part 175B by skipping the seventh resonator 170⑦ from the sixth resonator 170⑥ at the output step end of a signal when the signal is output through the output port part 175B.

In this case, the front end of the C-notch part 143 is extended to form a layer different from the layer of the second resonator 170②in the thickness direction thereof, but may be disposed to be not directly connected to the second resonator 170②.

Furthermore, it is preferred that the start stage of the L-notch part 141 is provided to be directly connected to the sixth resonator 170⑥. A window wall 145 that performs a function, such as the wall of a common cavity filter, may be further provided between the sixth resonator 170⑥ and the seventh resonator 170⑦.

The window wall 145 is formed to extend through portions that are spaced apart from each other between the sixth resonator 170⑥ and the seventh resonator 170⑦ in the thickness direction thereof. In this case, the front end of the window wall in the width direction thereof at the one-side stage of the cavity C may be extended up to a location at which magnetic coupling between the sixth resonator 170⑥ and the seventh resonator 170⑦ is partially restricted.

According to the notch-forming part 140 embodied as the fourth embodiment, as referred for in FIG. 21, it may be seen that the C-notch and the L-notch are formed at the left stage and right stage of the passband.

As described above, the filter 100 (100A to100D) for a communication device according to an embodiment of the present disclosure provides an advantage in that a designer can secure a desired frequency characteristic because the cavity C is formed in a way to fold the base plate 105, but the notch-forming part 140 is more convenient and useful within the filter body that is small and slim in the thickness direction thereof.

Although it has been described that all the components constituting an embodiment of the present disclosure are combined into one or are combined and operated, the present disclosure is not necessarily limited to the embodiment. That is, one or more of all the components may be selectively combined and operated within the range of the present disclosure.

The above description is merely a description of the technical spirit of the present disclosure, and a person having ordinary knowledge in the field to which the present disclosure pertains may change and modify the present disclosure in various ways without departing from the essential characteristic of the present disclosure.

### [Industrial Applicability]

The present disclosure provides the filter for a communication device in which the notches can be easily formed and designed on both sides of a passband because various frequency characteristics can be secured by forming the cavity through a folding method, but constructing the notch-forming part that is slightly small in size in the thickness direction thereof and that has a convenient and simple form within the cavity.

## Claims

1. A filter for a communication device, comprising:
a base plate that forms a hexahedral cavity in which a thickness of the cavity in forward and backward directions thereof is at least smaller than a size of a width of the cavity in a horizontal direction and up and down directions of the cavity are a length direction when a radiation direction of antenna elements are defined as the forward and backward directions;
multiple resonators that form an identical layer with respect to the forward and backward directions (thickness direction) of the cavity; and
an input port part that receives a predetermined signal to one-side end resonator disposed most closely to one end of the cavity in the length direction, among the multiple resonators, and an output port part that outputs a predetermined signal from the other-side end resonator disposed most closely to the other end of the cavity in the length direction, among the multiple resonators,
wherein the filter comprises a notch-forming part disposed within the cavity and disposed relatively closely compared to a separation distance between portions in which magnetic coupling of resonance elements or portions in which electric coupling thereof are dominant, among adjacent resonance elements comprising the input port part, the output port part, and the multiple resonators that are sequentially selected in the length direction.

2. The filter of claim 1, wherein a resonance stage that is the portion in which the electric coupling is dominant (hereinafter referred to as an "electric field part") as a portion having a great size in the length direction, compared to other portion (hereinafter referred to as a "magnetic field part") in which the magnetic coupling is relatively dominant, is formed at a front end part of each of the multiple resonators, which corresponds to the other end part in the width direction, except the input port part and the output port part, among the resonance elements, so that the resonance stages are divided.

3. The filter of claim 2, wherein the notch-forming part comprises an L-notch part that is adjacent and formed so that the entire L-notch part affects only the magnetic field part and a C-notch part that is adjacent and formed so that any part of the C-notch part affects the electric field part.

4. The filter of claim 3, wherein the L-notch part and the C-notch part each have a function as a cross-coupling bar that couples the multiple resonators sequentially arranged in the length direction by skipping at least one or two or more resonators.

5. The filter of claim 3, wherein the L-notch part and the C-notch part are disposed to form an identical layer in the thickness direction within the cavity, but are disposed to form a layer different from a layer of the multiple resonators.

6. The filter of claim 5, wherein the L-notch part is provided to form a closed loop that is extended from one side of the cavity in a width direction to a direction toward the other side thereof in the width direction.

7. The filter of claim 5, wherein the C-notch part is extended from one side of the cavity in the width direction to the direction toward the other side in the width direction and is provided relatively adjacently to any one of the resonance stages of the multiple resonators.

8. The filter of claim 5, wherein the L-notch part is disposed relatively closely compared to a separation distance between the electric field parts of adjacent resonance elements, among adjacent at least three resonance elements that are sequentially selected in the length direction for multi-path coupling, forms a predetermined notch at a right stage of a passband, and restricts a region of filtering frequency.

9. The filter of claim 5, wherein the C-notch part is disposed relatively closely compared to a separation distance between the magnetic field parts of adjacent resonance elements, among adjacent at least three resonance elements that are sequentially selected in the length direction for multi-path coupling, forms a predetermined notch at a left stage of a passband, and restricts a region of filtering frequency.

10. The filter of claim 5, wherein the L-notch part and the C-notch part are defined as any one of the L-notch part and the C-notch part depending on properties of the electric field part and the magnetic field part that relatively strongly appear by adjacent coupling or the cross-coupling, among the multiple resonators.

11. The filter of claim 10, wherein if the L-notch part and the C-notch part are included in different ranges of the cavity in the length direction, the L-notch part and the C-notch part are defined as any one of the L-notch part and the C-notch part depending on the properties of the electric field part and the magnetic field part, among the multiple resonators.

12. The filter of claim 5, wherein if the L-notch part and the C-notch part are included as a single component in an identical range of the cavity in the length direction, the L-notch part and the C-notch part are defined as a complex component having both functions of the L-notch part and the C-notch part depending on properties by adjacent coupling and properties by the cross-coupling, among the multiple resonators.

13. The filter of claim 5, wherein when the input port part and the output port part are included as a coupled resonance element, the C-notch part is branched from the input port part and is extended and formed toward the resonance stage of a resonator adjacent to a one-side end resonator by skipping the one-side end resonator.

14. The filter of claim 5, wherein when the input port part and the output port part are included as a coupled resonance element, the L-notch part is branched from the output port part and is connected and formed in a resonator adjacent to the other-side end resonator by skipping the other-side end resonator.

15. The filter of claim 1, wherein the cavity forms the single base plate through a folding method.

16. The filter of claim 15, wherein the notch-forming part is manufactured as a separate component in a panel form and is coupled to a component corresponding to the base plate or within the cavity.

17. The filter of claim 15, wherein the notch-forming part is provided integrally with the base plate, but is provided in a form of in a panel disposed within the cavity upon the folding.
